# FASCICULE DE BREVET EUROPEEN

(11) **EP 2 344 924 B1**
(45) Date de publication et mention de la délivrance du brevet: **13.12.2017**
(21) Numéro de dépôt: 09744456.6
(22) Date de dépôt: 06.10.2009
(51) Int. Cl.: G02C 5/00, G02C 5/22

(54) **ÉLÉMENT DE CHARNIÈRE ÉLASTIQUE POUR MONTURE DE LUNETTES**
ELASTISCHES GELENKELEMENT FÜR BRILLENGESTELLE
ELASTIC HINGE ELEMENT FOR SPECTACLES FRAME

(30) Priorité: 06.10.2008 IT MI20080321 U; 12.11.2008 FR 0806305
(43) Date de publication de la demande: 20.07.2011
(73) Titulaire: Visottica Industrie S. P. A., 31058 Susegana TV (IT)
(72) Inventeur: HOTELLIER, Christophe, F-39400 Morez (FR); BUSSOD, Pierre, F-39400 La Mouille (FR); DONJON, Jean-Marc, F-39150 Grande Riviere (FR); MATHIEU, François, F-39360 Larrivoire (FR)
(74) Mandataire: Faggioni, Carlo Maria
(86) Numéro de dépôt international: PCT/IB2009/054376
(87) Numéro de publication internationale: WO 2010/041199

(56) Documents cités:
- EP-A- 0 615 149
- EP-A- 0 623 837
- EP-A- 0 632 306
- WO-A-2004/040355
- WO-A-2005/111701
- WO-A-2005/121873
- WO-A-2008/096251
- FR-A- 2 614 953
- FR-A- 2 793 323
- FR-A1- 2 741 459
- US-A- 4 494 834
- US-A- 4 689 851
- US-A- 4 713 865
- US-A- 4 991 258
- US-A- 5 657 107
- US-A- 5 838 418
- US-A1- 2005 217 073
- US-B1- 6 241 354

## Description

La présente invention concerne une charnière pour monture de lunettes et plus précisément une charnière élastique.

Selon la technique connue, les charnières d'une monture lunettes sont des mécanismes qui permettent d'articuler deux branches latérales sur la monture de lunettes.

Les charnières pour monture de lunettes comprennent une variété de formes considérable, tant au niveau de la fonctionnalité qu'au niveau esthétique qu'elles doivent conférer aux lunettes. Parmi les charnières les plus utilisées aujourd'hui, les charnières flexibles comprennent un élément de charnière élastique qui est couplé, grâce à un axe d'articulation, à un tenon prévu sur la monture de lunettes. L'élément de charnière élastique comprend généralement un boîtier ménagé sur chaque branche, dans lequel se déplace une coulisse. Le mouvement de translation de la coulisse dans le boîtier est contrecarré par une pièce élastique, généralement un ressort hélicoïdal, qui confère une élasticité au mouvement de la coulisse.

Cette configuration peut également être inversée, c'est pourquoi le tenon peut être agencé sur les branches et l'élément de charnière élastique agencé sur la monture de lunettes.

Des exemples d'éléments de charnières élastiques classiques sont décrits dans les documents EP1175638 ou FR2662516 au nom de la demanderesse. Dans ces éléments de charnière, le ressort hélicoïdal est enfilé sur un axe de la coulisse. L'axe maintient le ressort hélicoïdal dans la bonne position de fonctionnement et, d'autre part, il sert de butée à l'extrémité distale du ressort hélicoïdal (c'est-à-dire l'extrémité arrière de l'axe, la plus proche du fond du boîtier). L'autre extrémité du ressort, c'est-à-dire l'extrémité proximale, est bloqué par différents moyens de fixation. De cette façon, le mouvement de translation de l'élément à coulisse comprime le ressort qui produit donc la réaction élastique voulue.

Ces charnières posent certains problèmes dus à la finesse de l'axe recevant le ressort (qui doit supporter toute la charge de traction de l'élément à coulisse) et à des problèmes de fabrication. De plus, comme il n'est pas possible d'obtenir des tolérances exactes sur la longueur du ressort, pour réaliser un guidage précis de la coulisse dans le boîtier, il faut prévoir dans la partie proximale de la coulisse des portions de guidage spéciales qui s'ajoutent à la longueur de l'axe portant le ressort et imposent un dimension longitudinale minimal au

Des charnières ont déjà été proposées avec un ressort hélicoïdal non enfilé sur un axe allongé, mais plutôt contenu entre les deux portions latérales du corps en U de l'élément à coulisse. Des exemples desdites charnières sont décrits dans les documents EP0632306 et EP0615149.

Ces charnières posent cependant d'autres problèmes. En particulier, le ressort hélicoïdal n'est ni bien contenu ni bien soutenu, au point que dans certains cas - par exemple US4351086 - on prévoit encore un axe central de retenue pour éviter toute déformation indésirable qui en compromettrait le fonctionnement ; par ailleurs, le corps de l'élément coulissant conserve soit une certaine souplesse latérale, soit une faible résistance à la torsion, qui ne permettent pas d'obtenir une rigidité adéquate pour que le coulissement à l'intérieur du boîtier soit précis, spécialement sous contrainte.

De même, les configurations proposées jusqu'ici ne permettent pas d'utiliser de simples clips de retenue de la coulisse dans le boîtier - comme c'est le cas en revanche avec les coulisses traditionnelles - et il est par conséquent nécessaire de prévoir des systèmes d'assemblage complexes, tel qu'illustré par exemple dans les documents US6631194 et FR2206513. US4991258, FR2741459 et WO2005121873 décrivent d'autres charnières élastiques pour des montures de lunettes. Enfin, dans certains cas la coulisse se déplace dans son boîtier en contact direct avec le rebord de la branche sur laquelle elle est soudée, ce qui entraîne des problèmes de soudure de la charnière, ainsi que de précision de guidage de la coulisse.

Ainsi, il peut être souhaité de résoudre les inconvénients susmentionnés, en fournissant un élément de charnière élastique à haute résistance, tant en traction qu'en torsion, munie de peu d'éléments faciles à assembler. Il peut également être souhaité de prévoir un élément de charnière élastique qui puisse loger avec précision une ou plusieurs pièces élastiques, pas nécessairement sous forme de ressort hélicoïdal, qui soient bien délimitées latéralement de manière à ne pas causer de déformations qui pourraient en compromettre le bon fonctionnement et la durée. De même, il peut être souhaité de prévoir une coulisse de charnière qui puisse être fabriquée de façon économique, notamment par enlèvement de copeaux et, si possible, également avec des matériaux non ferreux.

Enfin, il peut également être souhaité de prévoir une plus grande rigidité et une plus grande précision de guidage de la coulisse dans son boîtier.

Des modes de réalisation de l'invention concernent un élément de charnière élastique pour monture de lunettes, selon la revendication 1, comprenant : un boîtier comprenant une cavité de guidage, une coulisse comprenant un corps se déplaçant dans la cavité de guidage, et au moins une pièce élastique coopérant avec le boîtier pour produire une réaction élastique qui s'oppose à l'extraction de la coulisse de la cavité de guidage, dans lequel le corps de coulisse comporte une cavité interne recevant la pièce élastique, et comprenant un clip de retenue pour bloquer une extrémité proximale de la pièce élastique par rapport au boîtier, le clip de retenue comprenant des bras flexibles s'étendant dans une direction distale et des moyens de retenue coopérant avec le boîtier.

Selon l'invention, le corps de coulisse comporte des fentes pratiquées sur des côtés opposés de celui-ci, des parois de la cavité de guidage comportent des rainures longitudinales, et les bras flexibles du clip de retenue s'engagent dans les fentes du corps de coulisse et dans les rainures longitudinales de la cavité de guidage, pour assurer le guidage de la coulisse dans le boîtier.

Selon un mode de réalisation, la longueur des fentes est supérieure à celle des bras.

Selon un mode de réalisation, les moyens de retenue du clip de retenue comprennent des ergots agencés sur les bras flexibles et prévus pour s'encliqueter dans des évidements transversaux ménagés sur les parois de la cavité de guidage.

Selon un mode de réalisation, les ergots sont munis d'un angle d'ancrage.

Selon un mode de réalisation, les ergots présentent une surface inclinée et sont destinés à servir de butée de fin course en s'appuyant sur les portions d'extrémité des fentes, les surfaces inclinées permettant d'utiliser un effort de traction longitudinal pour verrouiller les ergots par compression dans leur creux transversaux de la cavité de guidage.

Selon un mode de réalisation, les ergots sont destinés à s'engager dans les portions d'extrémité des fentes conformées avec un coude de raccord servant à transformer une traction longitudinale sur la coulisse en action de pression des ergots vers les creux transversaux respectifs de la cavité de guidage.

Selon un mode de réalisation, le clip est obtenu à partir d'une plaque métallique de faible épaisseur.

Selon un mode de réalisation, le clip présente sensiblement une forme en U ou une forme en H non symétrique.

Selon un mode de réalisation, le boîtier muni de la cavité de guidage est en forme de socle et le clip maintient la coulisse dans le socle pour permettre une livraison assemblée de l'élément de charnière avant montage de l'élément de charnière sur un support.

Selon un mode de réalisation, le corps de coulisse est sensiblement en forme de boîte allongée prismatique, cylindrique ou cylindrique tronquée, et la cavité interne du corps de coulisse est de forme adaptée pour recevoir avec précision la pièce élastique.

Selon un mode de réalisation, le corps de coulisse présente une largeur qui est au moins le double de sa hauteur.

Selon un mode de réalisation, le corps de coulisse est fabriqué par injection de matériau polymère, par injection de matière plastique ou par moulage et injection de métal.

Selon un mode de réalisation, la coulisse comporte au moins un charnon percé permettant l'articulation avec un tenon de charnière.

Selon un mode de réalisation, la pièce élastique comprend un ressort hélicoïdal ou une paire de ressorts hélicoïdaux placés côte à côte.

Selon un mode de réalisation, la pièce élastique comprend un matériau élastomère plein ou alvéolaire.

Selon un mode de réalisation, la pièce élastique est solidaire du clip élastique et les deux éléments forment une seule pièce.

Selon un mode de réalisation, l'ensemble pièce élastique et clip élastique est obtenu par découpage d'une plaque métallique de faible épaisseur.

Selon un mode de réalisation, le corps de coulisse comprend au moins une ouverture pour introduire l'élément élastique.

Selon un mode de réalisation, l'élément élastique prend appui sur une partie distale du corps de coulisse.

Selon un mode de réalisation, la partie distale du corps de coulisse sur laquelle prend appui l'élément élastique comprend l'un des éléments suivants : une goupille, une vis, une pièce d'extrémité sertie ou soudée, un anneau ou une plaque élastique. Est également décrit un procédé de fabrication d'un élément de charnière élastique pour monture de lunettes, l'élément de charnière comprenant un boîtier comprenant une cavité de guidage, une coulisse comprenant un corps se déplaçant dans la cavité de guidage, et au moins une pièce élastique coopérant avec le boîtier pour produire une réaction élastique qui s'oppose à l'extraction de la coulisse de la cavité de guidage, le procédé comprenant les étapes consistant à : prévoir une cavité interne dans le corps de coulisse, réaliser un clip de retenue pour bloquer une extrémité proximale de la pièce élastique par rapport au boîtier, le clip de retenue comprenant des bras flexibles s'étendant dans une direction distale et des moyens de retenue coopérant avec le boîtier, agencer la pièce élastique dans la cavité interne, et agencer le clip de retenu dans l'élément de charnière élastique. Le procédé comprend les étapes consistant à : prévoir des fentes sur des côtés opposés du corps de coulisse, prévoir des rainures longitudinales sur des parois de la cavité de guidage, et agencer le clip de retenue dans l'élément de coulisse de manière que les bras flexibles du clip de retenue s'engagent dans les fentes du corps de coulisse et dans les rainures longitudinales de la cavité de guidage, pour assurer le guidage de la coulisse dans le boîtier. Le procédé comprend les étapes consistant à : prévoir des ergots sur les bras flexibles du clip de retenue, prévoir des évidements transversaux sur les parois de la cavité de guidage, et agencer le clip de retenue dans l'élément de coulisse de manière que les ergots s'encliquettent dans les évidements transversaux.

Selon un mode de réalisation, le clip est réalisé à partir d'une plaque métallique de faible épaisseur.

Selon un mode de réalisation, le clip est réalisé de manière à présenter sensiblement une forme en U ou une forme en H non symétrique.

Selon un mode de réalisation, le boîtier muni de la cavité de guidage est réalisé en forme de socle et comprenant une étape de montage de la coulisse dans le socle et de maintien de celle-ci au moyen du clip élastique, suivie d'une étape de livraison assemblée de l'élément de charnière avant le montage de celui-sur un support.

Selon un mode de réalisation, le corps de coulisse est conformé en forme de boîte allongée prismatique, cylindrique ou cylindrique tronquée, la cavité interne du corps de coulisse est réalisée de manière à présenter une forme adaptée pour recevoir avec précision la pièce élastique, et au moins une ouverture est prévue dans le corps de coulisse pour introduire l'élément élastique.

Selon un mode de réalisation, le corps de coulisse est fabriqué par injection de matériau polymère, par injection de matière plastique ou par moulage et injection de métal.

Selon un mode de réalisation, la coulisse est réalisée de manière à présenter au moins un charnon percé permettant son articulation avec un tenon de charnière.

Selon un mode de réalisation, la pièce élastique est réalisée à partir d'un ressort hélicoïdal ou d'une paire de ressorts hélicoïdaux placés côte à côte.

Selon un mode de réalisation, la pièce élastique est réalisée à partir d'un matériau élastomère plein ou alvéolaire.

Selon un mode de réalisation, la pièce élastique et le clip élastique sont réalisés d'un seul tenant.

Selon un mode de réalisation, l'ensemble pièce élastique et clip élastique est réalisé par découpage d'une plaque métallique de faible épaisseur.

Selon un mode de réalisation, le procédé comprend une étape de réalisation, sur une partie distale du corps de coulisse, d'un élément d'appui l'élément élastique, à partir de l'un des éléments suivants : une goupille, une vis, une pièce d'extrémité sertie ou soudée, un anneau ou une plaque élastique.

Ces caractéristiques seront mieux comprises à la lecture de la description suivante de modes de réalisation d'éléments de charnière élastique selon l'invention, faite à titre non limitatif en référence aux dessins annexés parmi lesquels :
- fig. 1 est une vue de dessus et en perspective latérale d'un boîtier et d'une coulisse mobile d'un élément de charnière selon un premier mode de réalisation de l'invention ;
- fig. 2 est une vue de dessous et en perspective latérale du boîtier et de la coulisse de la fig. 1 ;
- fig. 3 est une vue éclatée de la coulisse mobile de la fig. 1 ;
- fig. 4 est une vue en élévation latérale, partiellement en transparence, du boîtier et de la coulisse de la fig. 1;
- fig. 5 est une vue en plan de dessus, partiellement en transparence, du boîtier et de la coulisse de la fig. 1 ;
- fig. 6 est une vue en plan de dessous, partiellement en coupe, de l'élément de charnière assemblé de la fig. 1;
- fig. 7-11 sont des vues analogues à celles des fig. 1-5 d'un deuxième mode de réalisation de l'invention ;
- fig. 12-16 sont des vues analogues à celles des fig. 1-5 d'un troisième mode de réalisation de l'invention ;
- fig. 17-21 sont des vues analogues à celles des fig. 1-5 d'un quatrième mode de réalisation de l'invention ;
- fig. 22-26 sont des vues analogues à celles des fig. 1-5 d'un cinquième mode de réalisation de l'invention ;
- fig. 27-20 sont des vues analogues à celles des fig. 2-3 d'un sixième mode de réalisation de l'invention ;
- fig. 29-31 sont des vues respectivement en perspective et éclatée, des deux composants prêts pour l'assemblage et de la seule coulisse, selon un septième mode de réalisation de l'invention ;
- fig. 32-33 sont des vues en élévation latérale et en plan de dessus, partiellement en transparence, correspondant à la fig. 30 ;
- fig. 34 est une vue en plan de dessus, partiellement en transparence, de l'élément de charnière assemblé selon le septième mode de réalisation ;
- fig. 35-37 sont des vues correspondant aux fig. 29-31 d'un huitième mode de réalisation de l'invention ;
- fig. 38-40 sont des vues correspondant aux fig. 29-31 d'un neuvième mode de réalisation de l'invention;
- fig. 41 est une vue en perspective de la partie latérale supérieure du boîter et de la coulisse mobile de la charnière selon un autre mode de réalisation de l'invention, avec clip à traction ;
- fig. 42 est une vue en perspective latérale inférieure du boîter et de la coulisse mobile de la fig. 41 ;
- fig. 43A est une vue latérale en élévation, partiellement en coupe, du boîter et de la coulisse de la fig. 41 séparés ;
- fig. 43B est une vue analogue à celle de la fig. 43A avec les deux composants couplés ;
- fig. 44A et 44B sont des vues respectivement en plan, partiellement en coupe, des éléments des fig. 43A et 43B ;
- fig. 46-48B sont des vues analogues à celles des fig. 41-44B d'une variante de la charnière de l'invention, avec clip à compression ;
- fig. 50-52B sont des vues analogues à celles des fig. 41-44B d'une autre variante de la charnière, avec clip à compression et à double tête à oeillet;
- fig. 54-56B sont des vues analogues à celles des fig. 41-44B d'une autre variante de la charnière d'après le modèle, avec clip à compression et ressort inséré de côté ; et
- fig. 57A et 57B sont des vues, respectivement, en perspective et en plan d'un clip à compression servant d'exemple.

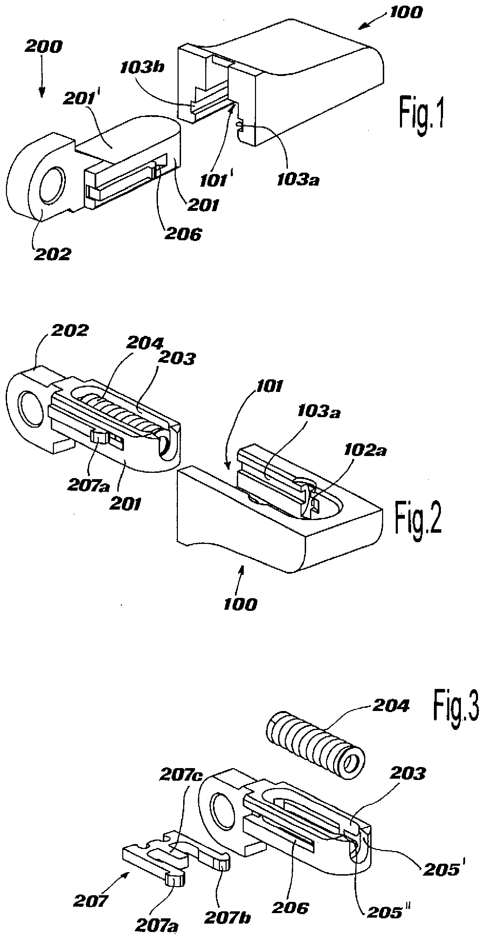

La fig. 1 illustre les deux composants principaux d'un élément de charnière élastique. De façon conventionnelle sont prévus, d'une part un boîtier 100 - ici destiné à être fixé sur un support, par exemple sur le rebord d'une branche de lunettes (non montré) - et, d'autre part, une coulisse mobile 200.

La coulisse présente un corps 201 et un charnon 202 prolongeant le corps 201. Le charnon 202 est destiné à être assemblé, au moyen d'un axe d'articulation (non représenté), avec un tenon de charnière, par exemple un élément femelle en forme de U, pour former une charnière complète.

Le boîtier 100 présente une cavité de guidage 101 dans laquelle la coulisse 200 peut être insérée et se déplacer en longueur. Selon le mode de réalisation de la fig. 1, le boîtier 100 est représenté ouvert sur le côté inférieur, mais avant de monter l'élément de charnière sur les lunettes (par soudage), il peut être fermé au moyen d'une plaquette de fermeture (non représentée).

Dans un mode de réalisation, le corps de coulisse 201 a par exemple une forme prismatique creuse et forme une sorte de boîte. Selon le mode de réalisation qu'illustrent les fig. 1-5, le corps 201 de la coulisse 200 est sensiblement un parallélépipède rectangle, d'une largeur supérieure à celle du charnon 201. De plus, le corps de coulisse 201 présente un évidement 203', pouvant loger avec précision une pièce élastique 204, en forme de ressort hélicoïdal. L'évidement 203 s'étend le long de l'axe de déplacement longitudinal de la coulisse 200 et se prolonge sur toute la longueur du corps 201, jusque dans la zone de raccord avec le charnon 202.

Pour bloquer le ressort 204 dans le sens de la longueur, des épaulements de butée d'extrémité 205' et 205" ont été prévus sur le fond de l'évidement 203 et un clip élastique de retenue 207 a été partiellement introduit dans deux fentes ou ouvertures 206 sur deux côtés opposés du corps 201. Le clip de retenue 207 est ici de forme plate et comporte deux bras flexibles qui s'étendent dans une direction distale (c'est-à-dire vers l'extrémité arrière de l'élément de charnière, en direction du fond de la cavité de guidage) et une partie centrale formant une base du clip et reliant les deux bras flexibles. Le clip est sensiblement en forme U ou, comme représenté, sensiblement en forme de H non symétrique, avec des terminaisons proximales des bras qui se prolongent sensiblement au-delà de la base.

Le clip 207 est inséré dans le corps 201 avec la base tournée vers le charnon 202 et les deux bras tournés vers l'extrémité distale de la coulisse 200. Selon un aspect de l'invention, les deux bras flexibles et opposés du clip 207 entrent avec précision dans les deux fentes 206 et en ressortent partiellement. Selon le mode de réalisation représenté, les deux bras se terminent par des ergots de retenue 207a et 207b qui présentent un angle vif incliné en biseau sur le côté tourné vers l'extrémité distale de la coulisse 200.

Les surfaces du clip 207 présentent une bonne planéité, de sorte que les bras peuvent coulisser avec précision dans les fentes 206, réalisées elles-aussi avec des plans supérieur et inférieur parallèles entre eux et pouvant guider avec précision les bras du clip 207.

La longueur des fentes 206 est au moins supérieure à la longueur des bras de la patte en U 207, de façon à pouvoir introduire ce dernier transversalement à l'intérieur de la cavité, dans la respective position de fonctionnement (fig. 2). Comme cela est montré, les fentes 206 peuvent même être d'une longueur supérieure, pour permettre le déplacement longitudinal de la coulisse par rapport au clip 207 qui est destiné à rester bloqué - une fois que l'élément de charnière est assemblé - dans le boîtier 100.

De préférence, le clip 207 présente aussi une petite tige centrale 207c, parallèle aux bras flexibles, conçue pour entrer dans le trou du noyau du ressort 204, pour obtenir un assemblage plus stable.

Pour pouvoir coupler le clip 207 dans le boîtier 100 comme voulu, la cavité de guidage 101 présente deux évidements transversaux opposés 102a et 102b et deux rainures longitudinales opposées 103a et 103b.

Les évidements ou creux 102a et 102b sont conçus pour loger et retenir les ergots terminaux 207a et 207b des bras du clip 207, de manière à bloquer le clip relativement au boîtier 100.

Les deux rainures longitudinales 103a et 103b sont prévues pour remplir deux fonctions principales : d'une part, servir de glissière de coulissement aux ergots 207a et 207b lors de l'introduction de la coulisse 200 dans le boîtier 100 ; d'autre part, servir d'appui aux bras du clip 207, une fois que l'élément de charnière a été assemblé.

Le couplage des bras du clip 207 et des rainures 103a et 103b assure un excellente retenue et une excellente stabilité longitudinale et transversale du clip 207 par rapport au boîtier 100. Cela se reflète dans la possibilité de guider parfaitement la coulisse 200 - qui se déplace de façon longitudinale guidée avec précision par les bras du clip 207 - par rapport au boîtier 100.

Dans ce but, les bras du clip sont d'une longueur suffisante pour guider et tenir la coulisse dans le boîtier 100. Par exemple, la portion des bras qui entre dans les fentes 206 est au moins égale à 3 mm, de préférence au moins 4 mm.

En d'autres termes, le corps de la coulisse 201 se déplace avec précision par rapport au boîtier 100 grâce à l'engagement mobile des fentes 206 sur les bras bloqués par rapport au boîtier 100.

La tolérance de montage est donc établie entre les plans d'appui des bras du clip 207 - soit par rapport aux fentes 206, soit par rapport aux rainures 103a et 103b - ainsi qu'entre la surface supérieure 201' du corps 201 et la surface supérieure 101' de la cavité de guidage 101.

De cette manière la coulisse 200 est comme « suspendue » tout en étant mobile dans le boîtier 100 et il n'est donc pas nécessaire de réaliser le moindre couplage de précision sur le côté inférieur de l'élément de charnière, c'est-à-dire entre le côté inférieur de la coulisse 200 et le couvercle du boîtier ou le support recevant l'élément de charnière, par exemple un bord d'appui d'une branche de lunettes.

Pendant la phase de montage de la coulisse 200, on introduit simplement le clip 207 à l'intérieur de l'évidement 203, à travers les fentes 206 ; on introduit ensuite le ressort 204, en l'enfilant sur l'axe 207c et en le portant en butée contre les épaulements 205' et 205". De cette façon il est possible d'assembler une coulisse 200 complète et autonome, sans devoir employer d'autres composants qui devraient se combiner avec le boîtier 100.

Pour terminer l'assemblage de l'élément de charnière, il suffit d'introduire la coulisse complète dans la cavité 101 par l'embouchure de celle-ci, en la faisant glisser avec les bras du clip 207 guidés le long des rainures 103a et 103b. Avantageusement, cette opération peut aussi être effectuée après avoir fixé ou soudé le boîtier 100 sur le support de l'élément de charnière, par exemple une branche de lunettes.

Pendant cette phase d'introduction, les ergots de retenue 207a et 207b entrent en contact avec le fond des rainures de guidage et, grâce au biseau de l'angle vif, sont poussés à rentrer partiellement dans les fentes 206, en vainquant la poussée élastique des bras du clip 207 dont la fourche tend à se refermer.

Une fois que la coulisse 200 est complètement introduite dans la cavité 101, les ergots de retenue 207a et 207b peuvent ressortir - grâce à l'élasticité des bras du clip 207- pour aller se loger dans les creux transversaux 102a et 102b. Le couplage des ergots de retenue dans les creux 102a et 102b empêche ensuite l'extraction du clip du boîtier 100.

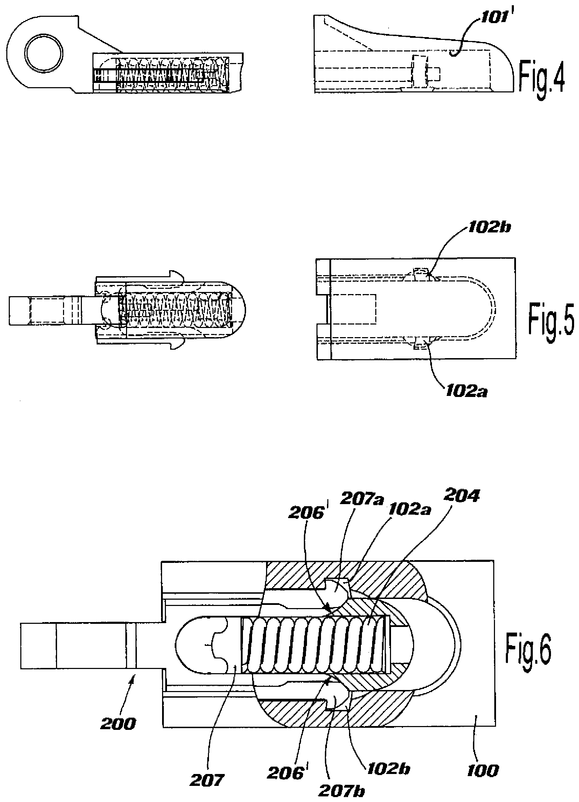

Tel que le montre clairement la coupe de la fig. 6, il faut remarquer que la partie terminale des fentes 206 présente avantageusement un raccord arqué 206'. En même temps, la tête à l'extrémité des ergots 207a et 207b présente une pointe opportunément arrondie, en forme de chapeau de champignon qui tend à épouser, sur le côté interne, le raccord 206'.

Cette configuration spéciale permet de produire l'effet décrit ci-après.

Si la coulisse 200 est partiellement extraite de son boîtier 100 - par exemple quand les branches de lunettes s'écartent trop par rapport à leur position d'ouverture normale - le clip 207 reste bloqué dans le boîtier 100 et, par conséquent, le ressort 204 est comprimé, déterminant une réaction élastique qui s'oppose à l'extraction.

La fin de course de la coulisse se vérifie quand les raccords d'extrémité 206' butent contre la tête en champignon des ergots 207a et 207b. Grâce au fait que les surfaces de couplage sont inclinées par rapport à l'axe de déplacement longitudinal de la coulisse 200, une traction d'extraction ultérieure se traduit par une poussée transversale sur les ergots 207a et 207b qui, par conséquent, entrent avec plus de force dans les évidements transversaux 102a et 102b. Pour autant, la tension d'extraction renforce ultérieurement le blocage du clip 207 dans le boîtier, en garantissant l'impossibilité d'une extraction complète.

De plus, avantageusement, la butée des extrémités 206' sur les ergots 207a et 207b définit une position déterminée de fin de course de la coulisse et empêche ainsi que le ressort 204 ne puisse se comprimer en bloc.

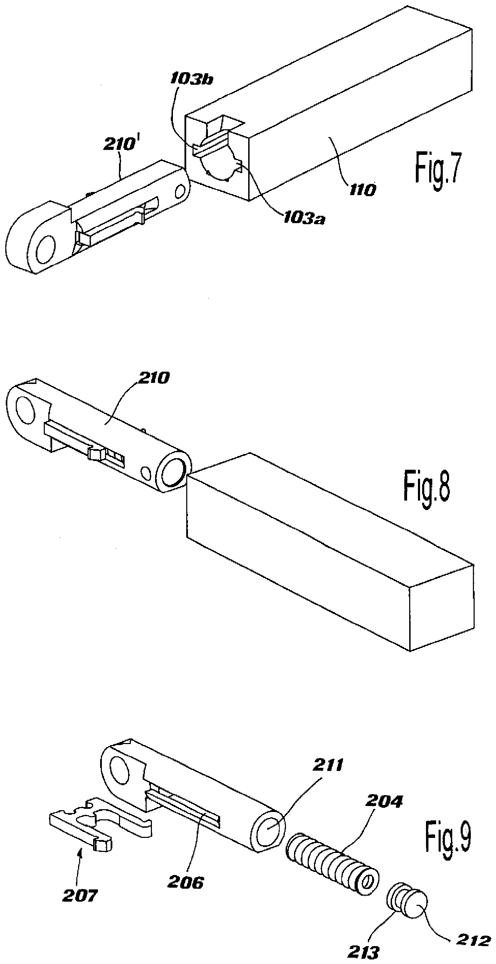

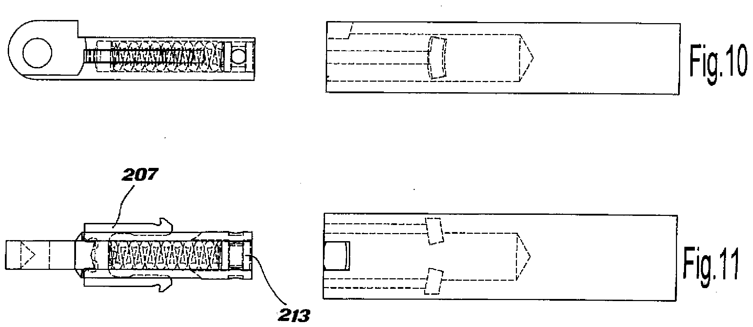

Les fig. 7-11 illustrent un second mode de réalisation de l'invention.

Celui-ci présente une configuration tout à fait analogue à celle du premier mode de réalisation. Dans ce cas cependant, le corps de la coulisse 210 est de forme sensiblement cylindrique. Ici le corps de coulisse présente une surface plane supérieure 210', soit une forme cylindrique tronquée.

La cavité de guidage dans le boîtier 110 est de forme correspondante. Le boîtier 110 forme une sorte de boîte complètement fermée, sauf pour l'embouchure d'introduction de la coulisse. Avec cette forme en coupe du corps de coulisse, la quantité de matériau à enlever pour obtenir la cavité de guidage dans le boîtier 110 est minime, ce qui permet par exemple de le réaliser directement l'élément de charnière dans le matériau d'une branche de lunettes.

Dans un mode de réalisation la coulisse 210 peut être obtenue à partir d'une pièce pleine et l'évidement 211 pour loger le ressort 204 peut être pratiqué par simple perçage. Le ressort est ensuite introduit dans le sens de la longueur par le trou d'ouverture de l'évidement 211. Pour bloquer le ressort en position, contre la base du clip 207, est prévu un petit couvercle cylindrique 212, muni d'une gorge circonférentielle 213. Ce petit couvercle peut être bloqué à l'extrémité ouverte du corps de coulisse 210 - agissant par conséquent comme butée d'arrêt du ressort 204 - au moyen de tiges (non illustrées) qui traversent la paroi du corps 210 et entrent dans la gorge 213.

Les fentes 206, tel qu'avec le mode de réalisation précédent, peuvent, par exemple, être obtenues par fraisage.

La section de la coulisse 200 est ici de forme sensiblement circulaire, et la rotation sur l'axe longitudinal est empêchée par la présence des bras du clip 207, qui se couplent avec précision dans les rainures longitudinales 103a et 103b de la cavité de guidage.

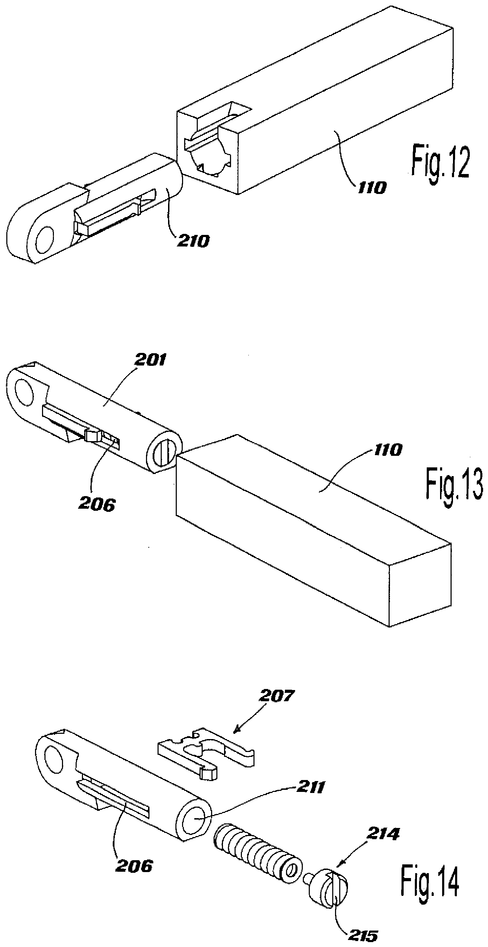

Les fig. 12-16 illustrent un troisième mode de réalisation de l'invention.

Celui-ci présente une configuration tout à fait analogue à celle du deuxième mode de réalisation. Dans ce cas cependant, le petit couvercle de fermeture de la cavité 211 est en forme de grain cylindrique fileté 214.
De préférence le grain présente une entaille diamétrale 215 pour pouvoir y engager un outil, tel un tournevis.

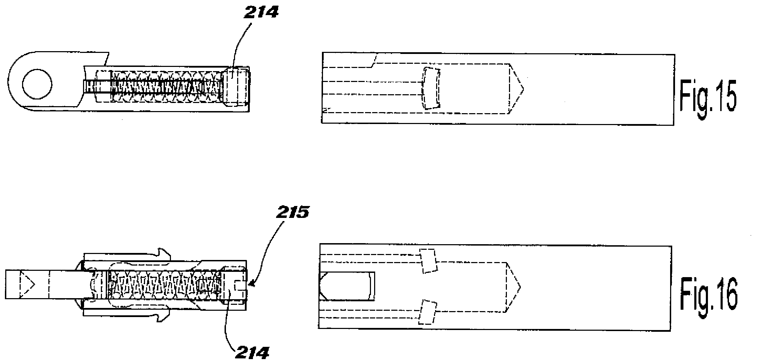

Le grain est destiné à être vissé sur le filet réalisé sur l'extrémité ouverte du corps de coulisse 210, tel que clairement illustré par les fig. 15 et 16.

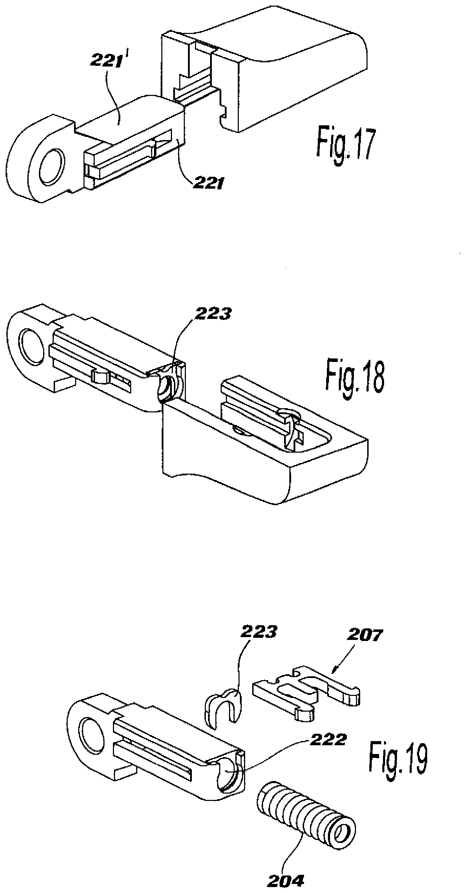

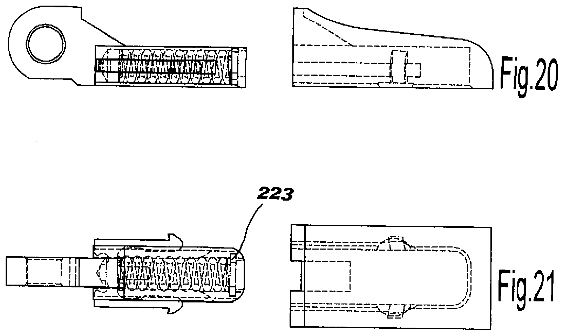

Les fig. 17-21 illustrent un quatrième mode de réalisation de l'invention.

Celui-ci présente une configuration analogue à celle du premier mode de réalisation. Dans ce cas cependant, le corps de coulisse 221 n'est pas ouvert sur le côté inférieur et est obtenu de préférence à partir du plein, en réalisant par perçage longitudinal une cavité 222 devant loger le ressort 204.

Le ressort 204 doit donc être introduit dans le sens de la longueur, comme dans le deuxième mode de réalisation.

L'élément de butée d'extrémité du ressort 204 est constitué par une bague, tel que Seeger 223, engagée à côté de l'embouchure de la cavité 222, qu'elle obstrue partiellement, de manière à empêcher que le ressort 204 ne sorte librement.

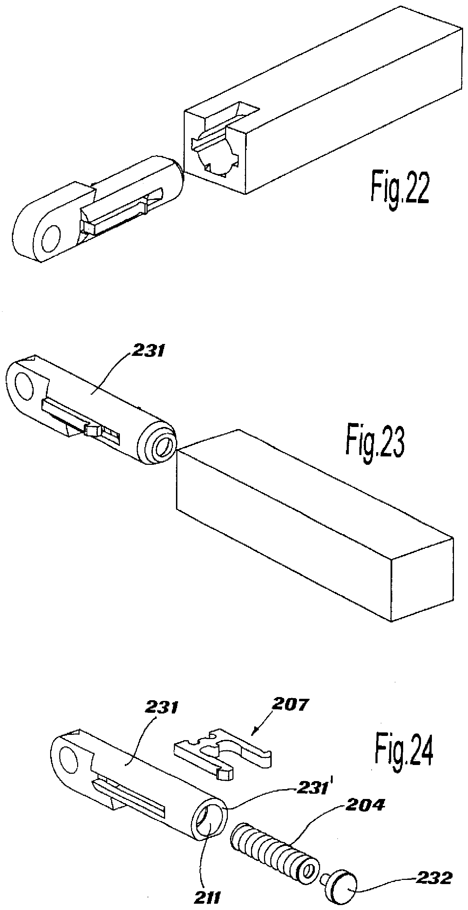

Les fig. 22-26 illustrent un cinquième mode de réalisation de l'invention.

Celle-ci présente une configuration analogue à celle du deuxième mode de réalisation. Dans ce cas cependant, l'élément de fermeture de la cavité 211, qui sert aussi de butée d'extrémité au ressort 204, est obtenu par déformation plastique du corps de coulisse 231.

En particulier, un petit couvercle circulaire 232 est placé sur une partie terminale cylindrique 231' du corps 231, après avoir monté le ressort 204 et le clip 207 dans la coulisse. Le petit couvercle 232 est introduit suffisamment à fond pour pouvoir ensuite déformer plastiquement la périphérie du tronçon d'extrémité 231' contre et derrière le petit couvercle 232.

L'extrémité fermée du corps de coulisse 231 apparaît tel que clairement illustré fig. 23 et 25-26.

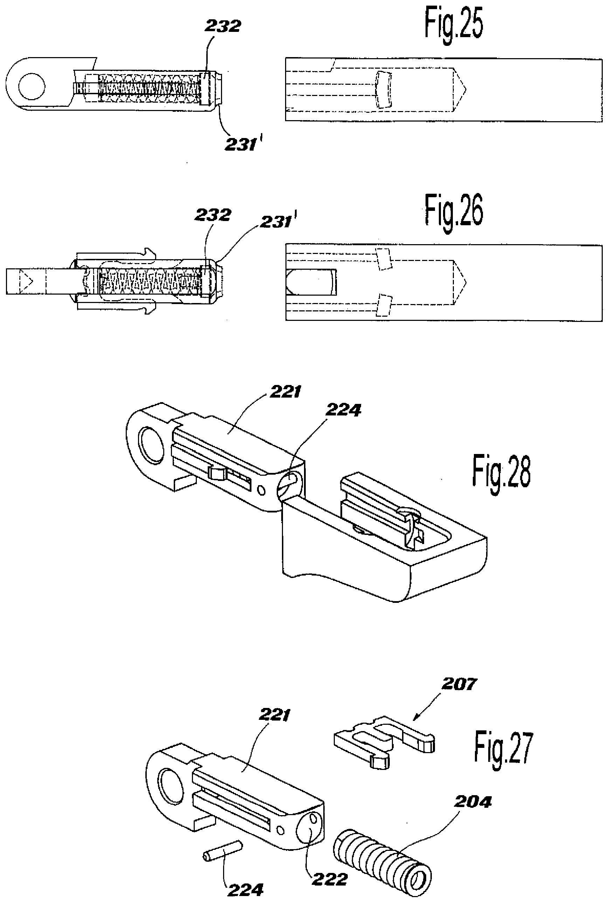

Les fig. 27 et 28 illustrent un sixième mode de réalisation de l'invention, qui équivaut au quatrième mode de réalisation. Dans ce cas, à la place de l'anneau Seeger 223, une simple tige transversale 224 a été prévue pour bloquer l'extrémité du ressort 204. La tige 224 est introduite à travers l'évidement longitudinal 222, près de son embouchure, aussitôt après avoir inséré le ressort 204.

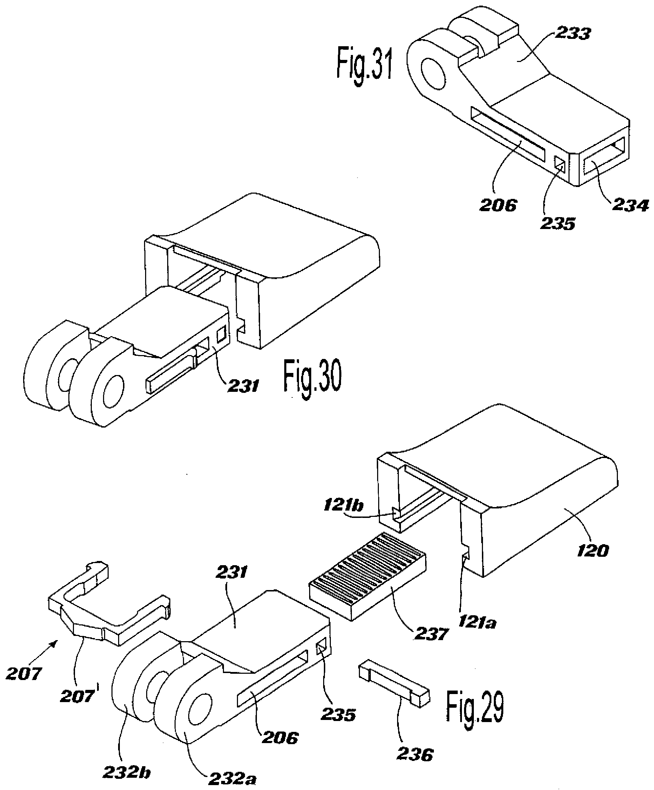

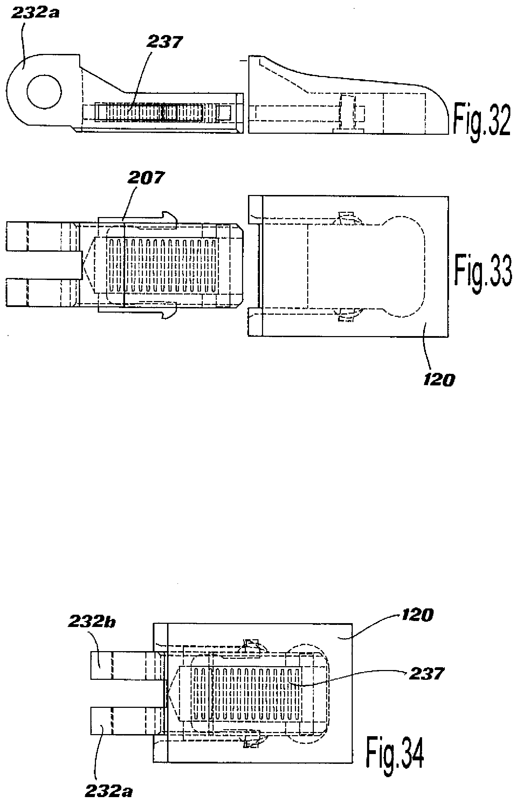

Les fig. 29-34 illustrent un septième mode de réalisation de l'invention.

L'élément de charnière illustré ici présente une largeur supérieure à celle des éléments de charnière illustrés plus haut, car il reçoit une paire de charnon 232a et 232b.

Le corps de coulisse 231 présente une largeur de l'ordre du double de sa hauteur. Il présente une forme de boîte prismatique sensiblement rectangulaire. A son extrémité proximale s'étendent les deux charnons 232a et 232b, parallèles entre eux, de profil plus haut que le corps 231 et raccordé à ce dernier par une portion de raccord trapézoïdal 233.

Comme le montrent les figures, le boîtier 120 est sensiblement le même que celui illustré dans les modes de réalisation précédents, sauf qu'il est plus large. Il présente les deux rainures longitudinales opposées 121a et 121b, pour guider les bras du clip, et deux creux transversaux pour accrocher les ergots du clip.

Selon le mode de réalisation illustré, l'évidement pour loger la pièce élastique 237 est réalisé de forme rectangulaire et est ouvert sur les deux côtés, par les fentes 206, et à l'arrière, par une embouchure 234. En outre, un trou transversal 235 est prévu pour l'introduction d'une tige de blocage 236 de la pièce élastique.

La pièce élastique 237 illustrée sur la fig. 29 est en forme de pain rectangulaire en matériau élastique, tel qu'élastomère ou caoutchouc naturel, plein ou alvéolaire. Avantageusement, la largeur du pain est égale à la largeur interne de la base du clip 207, qui relie les deux bras de celui-ci, le clip étant ici en forme de U. Sur la fig. 29, on remarque que la base du clip 207 présente sur le bas une petite protubérance triangulaire 207' qui permet de centrer et de maintenir le clip 207 en position à l'intérieur de la cavité de la coulisse.

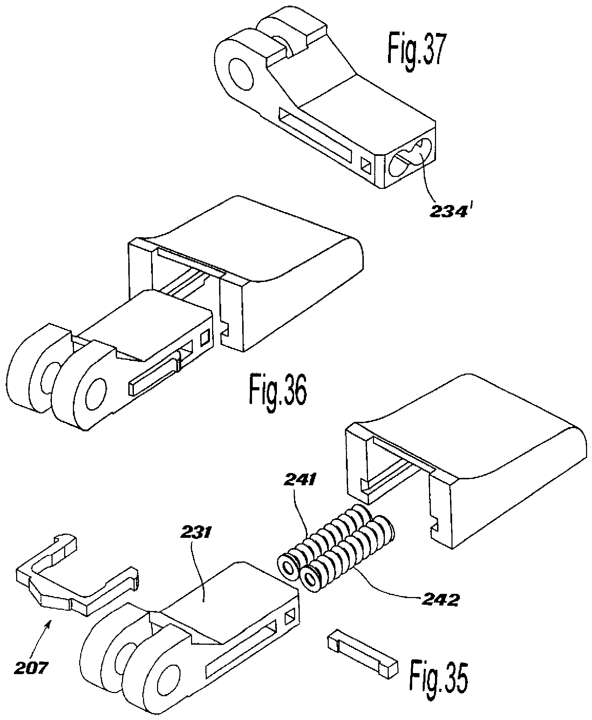

Les fig. 35-37 illustrent un huitième mode de réalisation de l'invention similaire au septième.

Dans ce mode de réalisation, la pièce élastique est constituée d'une paire de ressorts 241 et 242 disposés côte à côte à l'intérieur de la cavité du corps de coulisse 231. De la même façon, la cavité de réception des deux ressorts 241, 242 est réalisée sous forme de deux canaux circulaires longitudinaux adjacents 234'.

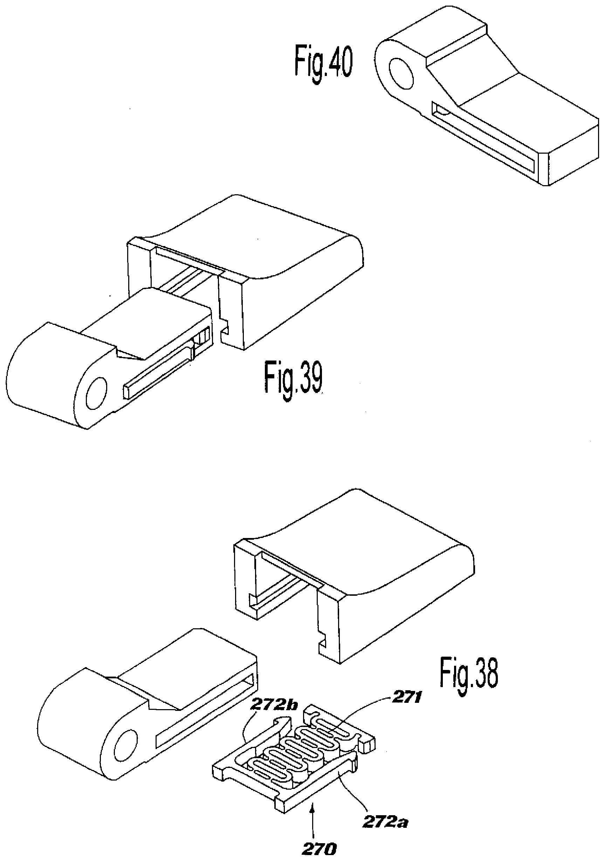

Les fig. 38-40 illustrent un neuvième mode de réalisation de l'invention équivalent à celui du septième mode de réalisation.

Dans ce mode de réalisation cependant, la pièce élastique 271 et le clip à bras 270 en forme de U sont solidaires entre eux, et sont éventuellement réalisés d'une seule pièce.

La cavité de réception dans le corps de coulisse peut être réalisée facilement pendant le moulage comme une poche transversale, ouverte seulement sur deux côtés de la coulisse. Le clip 270 peut ensuite être introduit transversalement dans la coulisse, après avoir éventuellement comprimé légèrement la portion de pièce élastique 271 pour mieux bloquer le clip en position : à cet effet, la longueur totale du clip 270 est supérieure à la longueur de la cavité interne de la coulisse.

La portion élastique 271 peut être réalisée d'une seule pièce avec les deux bras 272a et 272b, par exemple être découpée dans une plaque métallique. Pour augmenter l'élasticité de la portion 271, cette dernière peut présenter un dessin approprié à anses, tel qu'illustré fig. 38.

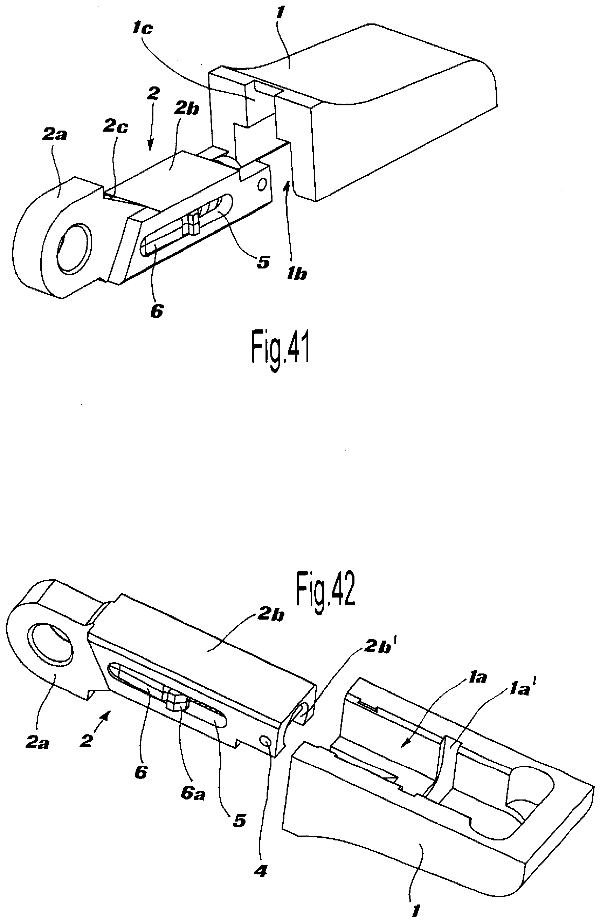

Dans la Fig. 41, de façon conventionnelle, sont prévus d'une part, un logement a boîte 1 - destiné à être soudé, par exemple, sur une branche de lunettes - et d'autre part, un élément à coulisse mobile 2 avec une tête à oeillet 2a. Cette dernière est destinée à être montée, au moyen d'un axe d'articulation (non apparent), sur un élément femelle en U d'un autre composant de charnière.

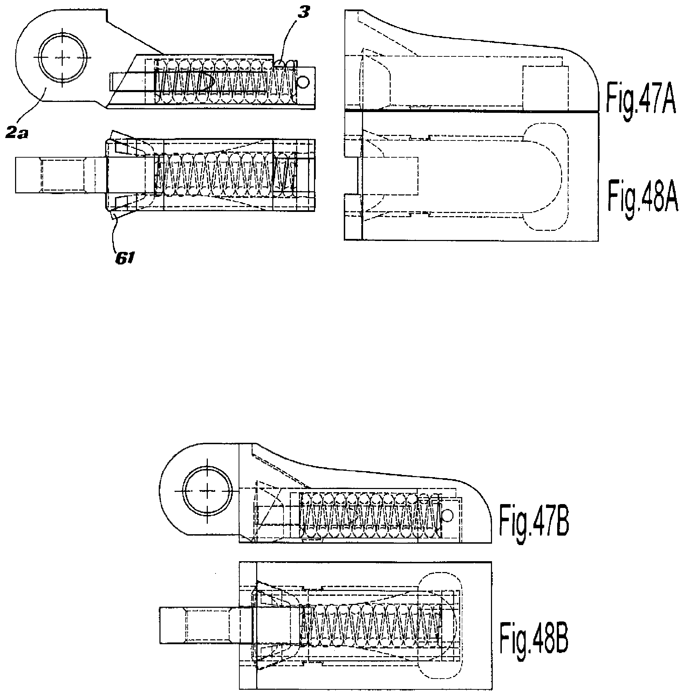

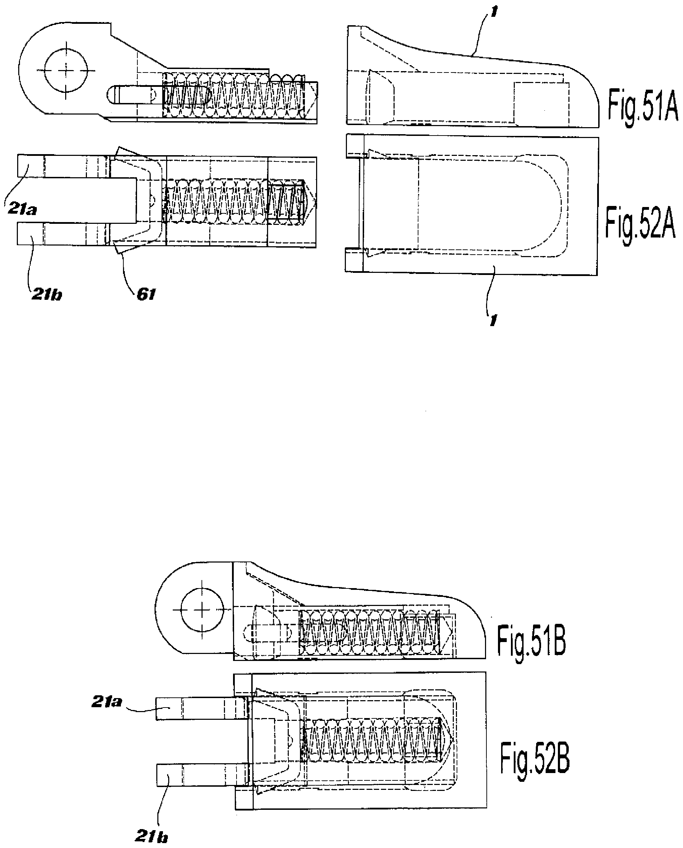

Le boîte 1 présente un évidement 1a dans lequel ira se loger la coulisse 2 pour se déplacer en longueur. Sur les figures 41-57, le boîter est représenté ouvert sur le côté inférieur (voir, par exemple, fig. 42) : avant l'assemblage de la charnière sur la monture des lunettes, le côté inférieur est normalement fermé par une plaquette de fermeture (non représentée).

Selon la technique connue, la coulisse 2 est conçue de façon à ce que la hauteur de la tête à oeillet dépasse de la portion de corps 2b restante. Cela implique notamment que le boîter 1 ait une hauteur dominante réduite - à l'endroit où il reçoit la cavité 1a - tandis que près de la sortie 1b de la cavité 1a il présente une hauteur majeure pour pouvoir recevoir également, au moins en partie, la tête à oeillet 2a, éventuellement dans un creux 1c spécialement prévu et ménagé sur la façade du logement 1. La cavité 1c devant recevoir partiellement la tête à oeillet 2a, présente le plus souvent un dessus incliné 1c', contre lequel peut s'appuyer une arête supérieure inclinée 2b de la tête à oeillet 2a.

Selon le mode de réalisation des Fig. 41-57, la portion de corps 2b a une forme prismatique a boîte.

Dans la version illustrée fig. 41-44B, la portion de corps 2b de la coulisse 2 est substantiellement un parallélépipède rectangle, d'une largeur même supérieure à celle de la tête à oeillet 2a. De plus, elle est munie d'une cavité cylindrique interne 2b', pour recevoir une pièce élastique 3, sous forme de ressort hélicoïdal. Les dimensions de l'évidement interne 2b' permettent de recevoir avec précision la pièce élastique 3. La longueur de la cavité 2b' parallèlement à l'axe de coulissement longitudinal de la coulisse 2 se prolonge sur toute la longueur de la portion de corps 2b, jusqu'au raccord avec la tête à oeillet.

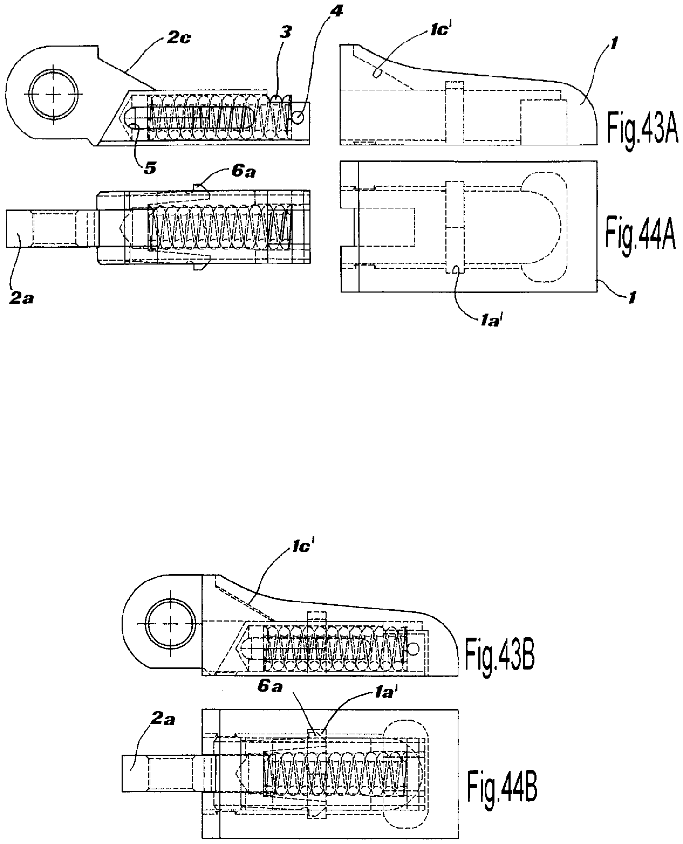

Pour bloquer avantageusement le ressort 3 dans la cavité 2b' de la coulisse 2 de manière adéquate deux trous 4 et deux ouvertures ou fentes 5 sont prévues sur le corps 2b sur les deux côtés opposés. Dans les deux trous 4, une cheville ou une goupille (non illustrée) peuvent être insérées pour constituer un élément de butée pour l'extrémité plus interne ou distale du ressort 3. Les deux ouvertures 5, qui s'étendent dans la direction de coulissement, permettent d'insérer un clip élastique en forme de patte en U 6 : ce clip 6 est monté, tel qu'illustré fig. 44A, avec la base orientée vers la tête à oeillet 2c et les deux branches tournées vers l'extrémité distale de la coulisse. Les deux bras demeurent dans le rayon de la coulisse 2 et sortent des ouvertures 5 avec les crans de retenue respectifs 6a qui présentent un biseau, dont l'utilité sera expliquée par la suite.

La longueur des ouvertures latérales 5 est au moins supérieure à la longueur des bras de la patte en U 6, de manière à pouvoir être montée à l'intérieur de la cavité 2b'. En réalité, la longueur des ouvertures 5 est même supérieure, pour permettre également un déplacement longitudinal de la coulisse par rapport au clip en 6 en U qui reste bloqué - une fois que la charnière est assemblée - dans les creux 1a' du logement 1, comme décrit par la suite. En particulier, les ouvertures 5 sont conçues de manière à permettre un déplacement relatif entre la coulisse 2 et le clip 6 d'environ 2-4 mm, course qui permet d'exploiter l'élasticité du ressort 3 et, par conséquent, l'efficacité de la charnière flex.

Comme la portion de corps 2b présente une forme a boîte substantiellement fermée, sauf pour les trous 4 et les ouvertures oblongues 5, pour introduire le ressort hélicoïdal 3 il est prévu que l'évidement interne 2b' s'ouvre vers l'extérieur du corps coulissant grâce à une sortie terminale, à l'extrémité distale.

Par conséquent, pendant la phase de montage, on monte d'abord le clip 6 dans la coulisse 2 puis, à travers la sortie terminale, on introduit le ressort 3, qu'on bloque en insérant une cheville dans les trous 4. De cette manière, il est possible d'assembler une coulisse 2 complète et autonome, sans utiliser d'autres composants qui devraient être montés dans le logement 1.

Pour terminer de monter la charnière, il suffit de placer la coulisse complète dans la cavité 1a à travers l'ouverture 1b. Cette opération peut aussi être effectuée avantageusement après avoir soudé le logement 1 à la branche des lunettes. Pendant cette phase d'introduction, la coulisse 2 se déplace jusqu'à ce que les crans de retenue 6a entrent en contact avec les parois de l'ouverture 1b. Comme les crans 6a présentent un biseau, il suffit d'exercer une pression majeure pour vaincre la poussée élastique des bras du clip 6, dont la fourche tend à se fermer, et pousser les crans dans l'ouverture 5. La coulisse peut donc être poussée à fond. Après avoir introduit complètement la coulisse 2 dans la cavité 1a (fig. 44B), les crans de retenue 6a peuvent sortir de nouveau - en s'insérant dans la cavité transversale 1a' pratiquée dans les parois de la cavité 1a - poussés par l'élasticité des bras du clip 6 dont la fourche tend à se rouvrir élastiquement. Le couplage des crans de retenue 6a dans la cavité 1a' empêche la coulisse de sortir ensuite du logement 1, car leur forme ne permet pas au bras du clip 6 de fléchir de nouveau. Conformément, ce type de clip est de type à traction car l'extraction de la coulisse du logement 1 est contrariée par le clip - qui agit sur le ressort 3 - dont les bras travaillent en traction.

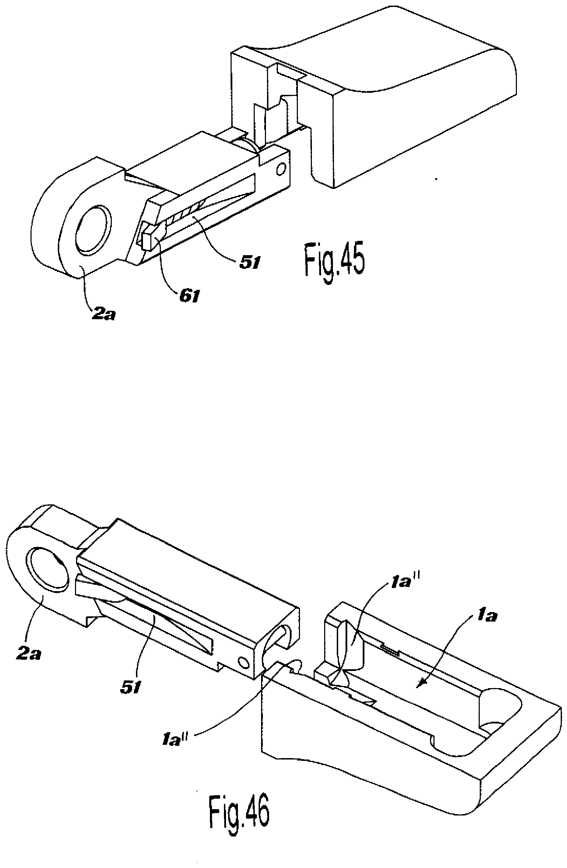

Par conséquent, on peut obtenir un assemblage stable de façon automatique. Les fig. 45-48B, qui ne font pas partie de l'invention, montrent une charnière analogue à celle des fig. 41-44B avec, par contre, un clip du type à compression. Dans ce cas en effet, un clip en U à bras légèrement divergents et tournés vers la tête à oeillet 2a est inséré dans les ouvertures opposées 51. Conformément, la cavité 1a du logement 1 présente deux cavités opposées 1a", près de la sortie 1b, munis d'un côté incliné pouvant recevoir les bords latéraux des bras écartés du clip en U 61 et un épaulement, perpendiculaire à l'axe de coulissement, qui sert de butée aux extrémités desdits bras.

L'assemblage est analogue à celui deja présenté. Avec l'introduction de la coulisse 2 dans la cavité de coulissement 1a, les bras du clip 61 se referment élastiquement pour se rouvrir une fois qu'ils ont dépassé les épaulements des creux 1a". Les extrémités du clip 61 restent ensuite appuyées sur les épaulements des creux 1a" pendant l'extraction de la coulisse 2 en opposition au ressort 3.

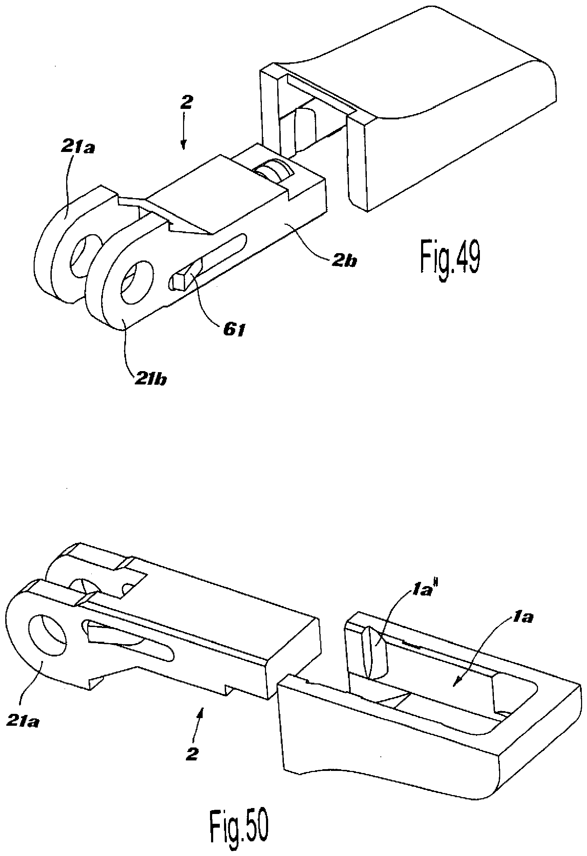

Les fig. 49-52B, qui ne font pas partie de l'invention, montrent une autre version de la charnière d'après l'invention, tout-à-fait semblable à celle des fig. 45-48B mais qui présente une double tête à oeillet 21a et 21b. Dans ce cas, la largeur de la coulisse 2 peut être légèrement supérieure à celle illustrée sur les fig. 41-48B de façon à avoir deux têtes à oeillet distinctes 21a et 21b, qui partent du même corps de coulisse 2b.

De préférence, contrairement aux versions décrites ci-dessus, les parois externes des deux têtes 21a et 21b sont alignées avec les parois de la portion de corps 2b de la coulisse 2.

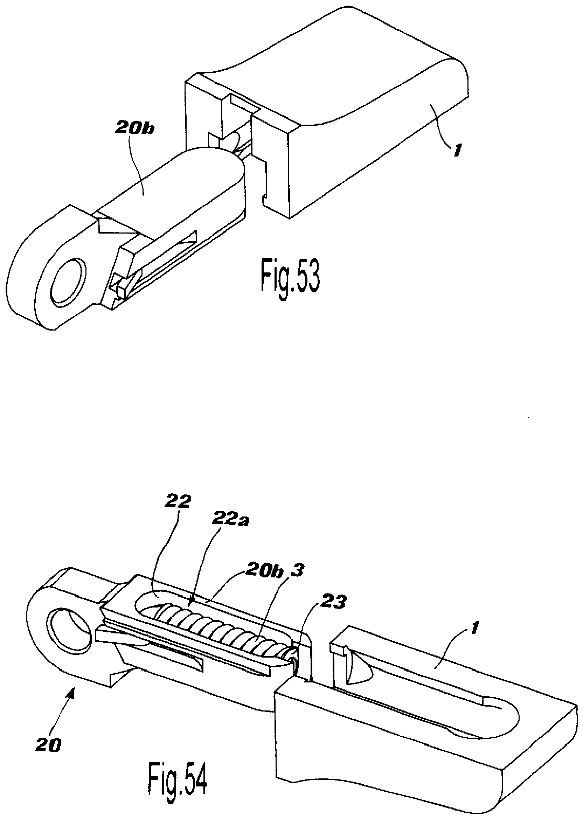

Enfin, les fig. 53-56B, qui ne font pas partie de l'invention, montrent une charnière où la portion de corps 20b de la coulisse 20 présente également une ouverture 22 sur la surface inférieure ou au fond, comme l'illustre bien la fig. 54. Dans ce cas, l'ouverture terminale de l'extrémité distale peut aussi avoir des dimensions très réduites ou manquer, car le ressort hélicoïdal 3 est destiné à être introduit transversalement dans la cavité de la coulisse grâce à l'ouverture 22.

La pose d'un anneau de retenue 23, tel qu'un anneau Seeger, est prévue pour bloquer l'extrémité distale du ressort 3 au cas où la coulisse présenterait une ouverture terminale.

Comme illustré fig. 53, la portion de corps 20b de la coulisse a boîte 20 est toujours prismatique, mais l'extrémité distale peut être courbe.

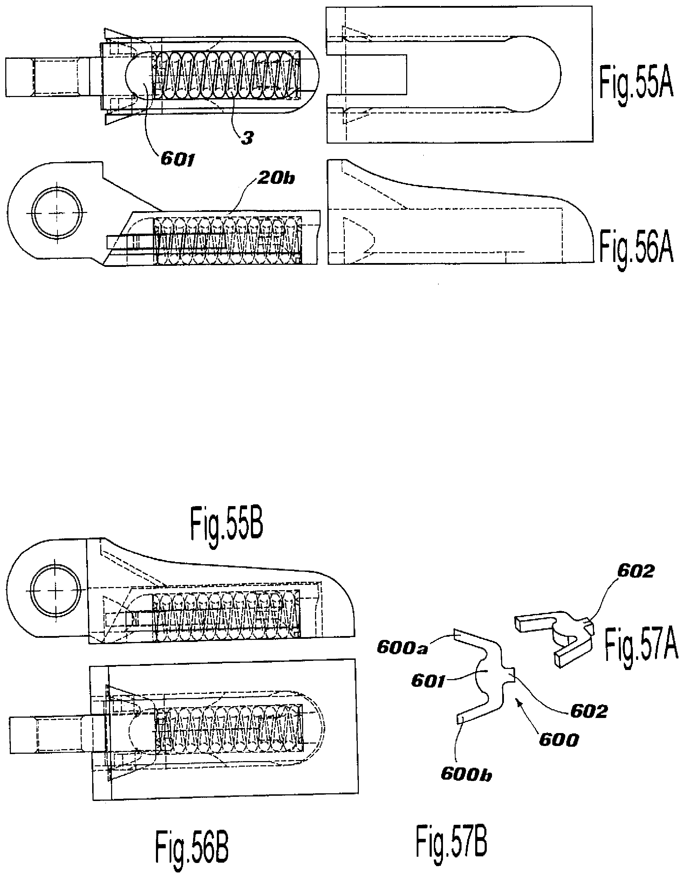

Les fig. 57A et 57B, qui ne font pas partie de l'invention, montrent le détail d'un clip 600 à compression illustrative. Ce clip 600 présente un corps 601 d'où partent deux bras écartés 600a et 600b. Le corps de raccord 601 est arrondi dans la direction où les bras se détendent, tandis qu'il présente une petite saillie 602 du côté opposé, sur l'axe de symétrie.

La saillie 602 sert à mieux maintenir le ressort hélicoïdal 3 en position.

Par contre, la partie arrondie du corps de raccord 601 doit épouser le profil arrondi correspondant de l'extrémité proximale (c'est-à-dire près de la tête à oeillet) de la cavité 22a du logement du ressort 3. Plus précisément, au cas où la cavité de boîter 22a et l'ouverture 22 correspondante seraient réalisées avec un seul fraisage longitudinal dans la portion de corps 20b, les deux extrémités s'avèreraient nécessairement arrondies (du même rayon que celui de la fraise utilisée) : en choisissant opportunément le rayon d'arrondissage du corps de raccord 601, il est possible de l'ajuster à la courbure de l'extrémité proximale de la cavité 22, au profit de la stabilité de couplage quand la coulisse est complètement insérée dans le logement de boîter (fig. 55B et 56B).

Le dimensionnement singulier du corps de coulisse, uni à la particulière configuration à boîte de l'invention, permettent de produire également ce type de coulisse avec des matières plastiques, tout en conservant une résistance adéquate du dispositif aux cycles de traction répétés.

En alternative, la même coulisse peut être obtenue également avec la technologie MIM (« Metal Injection Moulding » ou Moulage par Injection de Métal »).

Dans ce cas, l'évidement et les fentes de sortie du clip peuvent être réalisés directement pendant la phase de moulage au lieu que par fraisage avec enlèvement de matière.

Comme le montre clairement la description qui précède, des modes de réalisation de coulisses selon l'invention peuvent être compacts, solides et résistants. La conformation particulière du corps de coulisse avec évidement et ouvertures latérales pour l'extension des bras de guidage est facile à produire de façon économique avec des procédés de fabrication technologiques ; par exemple, une série de fraisages d'une pièce en métal massif permet d'obtenir aisément la coulisse de l'invention.

La forme spéciale, prismatique, avec l'évidement interne et ouvertures latérales est facile à réaliser de façon économique avec des procédés techniques d'usinage ; par exemple, une série de fraisages sur une pièce pleine en métal permet d'obtenir aisément le modèle de coulisse.

Par ailleurs, la solidité intrinsèque de cette configuration permet de fabriquer lesdits composants non seulement avec des matériaux métalliques usinés à la machine, mais aussi, par exemple, avec des procédés techniques d'injection de matière plastique ou de poudres de métal (MIM).

Grâce à la solution décrite ici, il est possible d'atteindre les objectifs exposés ci-dessus, avec de nombreux avantages.

La coulisse comprend un évidement qui renferme presque complètement la pièce élastique allongée, sauf sur un côté d'introduction. De cette façon, la pièce élastique est bien retenue et bien bloquée et, par conséquent, même si elle est très allongée, elle ne présente pas de problèmes de déformation ou de mauvais fonctionnement. Cela permet, comme cela a été clairement mis en évidence, d'utiliser aussi des pièces élastiques d'un autre type et pas nécessairement un ressort hélicoïdal en métal. Bien que cela ne soit pas expressément décrit, il est aussi possible d'envisager d'injecter du matériau élastomère directement dans l'évidement de la coulisse, après y avoir introduit un clip de retenue de forme adéquate (par exemple, muni d'un petit piston agissant sur la masse d'élastomère): un matériau élastomère ne pose aucun problème lié aux infiltrations d'eau.

Comme le corps de la coulisse est disposé autour de la pièce élastique et non pas dans son noyau (comme c'est le cas avec les coulisses à tige de support traditionnelles), il y a plus de masse et plus de moment d'inertie à disposition, ce qui, avantageusement, contribue à augmenter la robustesse à la traction et à la torsion exercées sur l'articulation des branches de lunettes.

La forme prismatique du corps de coulisse est particulièrement économique à réaliser, même en cas d'usinage à la machine, et permet de réaliser des plans de coulissement précis qui, avec l'augmentation de la rigidité, améliorent le guidage dans le boîtier.

En particulier, le prisme rectangulaire ne présente pas moins de quatre surfaces de coulissement qui, spécialement le long des quatre arêtes, sont en mesure de guider de façon excellente la coulisse dans le logement. Comme l'élastique est complètement contenu dans la portion de corps de la coulisse, il n'y a pas de portion de la coulisse qui ne soit pas disponible pour la fonction de guidage et, par conséquent, on obtient la plus grande longueur de guidage possible.

Pour le même motif, prévoir plus d'une pièce élastique dans la coulisse pour améliorer la fiabilité et le fonctionnement des charnières, par exemple deux ressorts hélicoïdaux côte à côte, ne crée pas de complications particulières.

La possibilité d'assembler la pièce élastique de façon stable dans la coulisse, grâce au clip et à l'éventuel élément de butée d'extrémité (goupille ou Seeger 23), simplifie la manutention des pièces pendant la phase d'assemblage final de la coulisse dans le logement, qui peut être réalisé de façon automatique.

Les clips peuvent être introduits aisément à travers les ouvertures allongées sur deux côtés opposés. La présence des ergots d'extrémité à tête en chapeau de champignon assure un blocage efficace du clip dans le boîtier, tout en garantissant une fin de course prédéfinie de la coulisse, qui représente un autre avantage en termes de durée de vie de la pièce élastique qui fonctionne toujours à son plus haut niveau.

Les bras du clip, qui ressortent partiellement du corps de coulisse, sont retenus avec précision dans les rainures longitudinales du boîtier ; en outre, les fentes latérales du corps de coulisse sont conçues pour coulisser avec précision sur lesdits bras. Cela produit non seulement un excellent guidage longitudinal de la coulisse mais aussi un effet anti-rotation.

La fonction anti-rotation ainsi réalisée est particulièrement efficace car le couple anti-rotation est réalisé dans des positions éloignées de l'axe central, ainsi que sur des rainures de guidage assez larges et basses (grâce à la faible épaisseur - tel que pour exemple 0.6 mm - du clip), ce qui permet d'obtenir des jeux minimes sans problèmes notables de tolérance dimensionnelle. Avantageusement, la fonction anti-rotation permet d'adopter également un corps de coulisse cylindrique, ce qui simplifie la réalisation d'un boîtier pouvant être même directement réalisé dans la branche de lunettes, dans certains modes de réalisation.

Le guidage le long des rainures longitudinales du boîtier ne requiert pas de glissière dans la partie inférieure du boîtier, ce qui évite tout contact de la coulisse avec le support de l'élément de charnière (par exemple une branche de lunettes) et augmente la simplicité de montage (soudure) de l'élément de charnière sur son support.

Les clips peuvent être insérés facilement grâce aux ouvertures oblongues des deux côtés opposés. Il est possible d'utiliser soit un clip à compression soit un clip à traction. Ce dernier offre l'avantage de mieux centrer le point d'ancrage sur la longueur du corps de boîter, ce qui équilibre davantage les efforts et ne crée pas d'obstacles à la distribution uniforme de quatre points de soudure sur le profil du périmètre du logement.

Enfin, la position centrale des ergots de retenue du clip, augmente la liberté de choix des points de soudage et réduit au minimum la longueur totale de l'élément de charnière.

## Revendications

1. Élément de charnière élastique pour monture de lunettes comprenant :
- un boîtier (100, 110, 120) comprenant une cavité de guidage (101),
- une coulisse (200) comprenant un corps se déplaçant dans la cavité de guidage (101), et
- au moins une pièce élastique (204, 237, 241, 242, 271) coopérant avec le boîtier (100) pour produire une réaction élastique qui s'oppose à l'extraction de la coulisse de la cavité de guidage (101), le corps de coulisse (201, 221, 231) comportant une cavité interne recevant la pièce élastique, et comprenant un clip de retenue (207) pour bloquer une extrémité proximale de la pièce élastique par rapport au boîtier (100), le clip de retenue comprenant des bras flexibles s'étendant dans une direction distale, c'est-à-dire vers l'extrémité arrière de l'élément de charnière, en direction du fond de la cavité de guidage (101), et des moyens de retenue (207a, 207b) coopérant avec le boîtier (100), et
- le corps de coulisse (201, 221, 231) comportant des fentes (206) pratiquées sur des côtés opposés de celui-ci,
- des parois de la cavité de guidage (101) comportant des rainures longitudinales (103a, 103b, 121a, 121b),
- les bras flexibles du clip de retenue s'engageant dans les fentes (206) du corps de coulisse et dans les rainures longitudinales de la cavité de guidage, pour assurer le guidage de la coulisse dans le boîtier.

2. Élément de charnière selon la revendication 1, dans lequel la longueur des fentes (206) est supérieure à celle des bras.

3. Élément de charnière selon l'une des revendications 1 à 2, dans lequel les moyens de retenue du clip de retenue comprennent des ergots (207a, 207b) agencés sur les bras flexibles et prévus pour s'encliqueter dans des évidements transversaux (102a, 102b) ménagés sur les parois de la cavité de guidage (101).

4. Élément de charnière selon la revendication 3, dans lequel les ergots sont munis d'un angle d'ancrage.

5. Élément de charnière selon l'une des revendications 3 3 ou ou 4, dans lequel les ergots (207a, 207b) présentent une surface inclinée et sont destinés à servir de butée de fin course en s'appuyant sur les portions d'extrémité (206') des fentes (206), les surfaces inclinées permettant d'utiliser un effort de traction longitudinal pour verrouiller les ergots par compression dans leur creux transversaux de la cavité de guidage (101).

6. Élément de charnière selon l'une des revendications 3 à 5, dans lequel les ergots (207a, 207b) sont destinés à s'engager dans les portions d'extrémité (206') des fentes (206) conformées avec un coude de raccord servant à transformer une traction longitudinale sur la coulisse en action de pression des ergots vers les creux transversaux respectifs de la cavité de guidage (101).

7. Élément de charnière selon l'une des revendications 1 à 6, dans lequel le clip (207) est obtenu à partir d'une plaque métallique de faible épaisseur.

8. Élément de charnière selon l'une des revendications 1 à 7, dans lequel le clip présente sensiblement une forme en U ou une forme en H non symétrique.

9. Élément de charnière selon l'une des revendications 1 à 8, dans lequel le boîtier (100) muni de la cavité de guidage est en forme de socle et le clip maintient la coulisse dans le socle pour permettre une livraison assemblée de l'élément de charnière avant montage de l'élément de charnière sur un support.

10. Élément de charnière selon la revendication 1, dans lequel ladite coulisse (2, 20) présente une portion de corps prismatique à boîte (2b, 20b) ayant des surfaces externes pouvant coulisser avec précision dans ladite cavité de coulissement (1a) et un évidemment interne (2b', 22a) pouvant loger ladite pièce élastique (3), et dans lequel le clip de retenue (6, 61, 600) est inséré dans ladite cavité interne (2b', 22a) à travers des ouvertures oblongues (5, 51) pratiquées sur les côtés opposés du corps prismatique (2b, 20b).

11. Élément de charnière selon la revendication 10, **caractérisé en ce que** ledit clip présente des bras avec une portion sortant (6a) desdites ouvertures oblongues (5, 51), ces dernières étant d'une longueur suffisante pour permettre le coulissement longitudinal desdites portions sortantes (6a) sur toute la course élastique de la coulisse dans le logement (1).

12. Élément de charnière selon la revendication 10, **caractérisé en ce que** ladite portion de corps prismatique à boîte (2b, 20b) présente une ouverture terminale à l'extrémité distale pour l'introduction longitudinale d'une pièce élastique dans ledit évidement interne (2b').

13. Élément de charnière selon la revendication 12, **caractérisé en ce que** ladite ouverture terminale présente des éléments de butée (4, 23) pour une extrémité de la pièce élastique (3).

14. Élément de charnière selon la revendication 10, **caractérisé en ce que** ladite portion de corps prismatique à boîte (2b, 20b) présente une ouverture longitudinale (22) sur un côté pour l'introduction latérale d'une pièce élastique dans ledit évidement interne (22a).

## Patentansprüche

1. Elastisches Scharnierelement für ein Brillengestell, umfassend:
- ein Gehäuse (100, 110, 120), das einen Führungshohlraum (101) aufweist,
- einen Schieber (200), der einen Körper aufweist, der sich in dem Führungshohlraum (101) verschiebt, und
- mindestens ein elastisches Teil (204, 237, 241, 242, 271), das mit dem Gehäuse (100) zusammenwirkt, um eine elastische Reaktion zu erzeugen, die dem Ausziehen des Schiebers aus dem Führungshohlraum (101) entgegenwirkt,
wobei der Schieberkörper (201, 221, 231) einen inneren Hohlraum aufweist, der das elastische Teil aufnimmt, und einen Halteclip (207) aufweist, um ein proximales Ende des elastischen Teils gegenüber dem Gehäuse (100) zu blockieren, wobei der Halteclip flexible Arme, die sich in eine distale Richtung, das heißt in Richtung des hinteren Endes des Scharnierelements, in Richtung des Bodens des Führungshohlraums (101) erstrecken, und Haltemittel (207a, 207b) aufweist, die mit dem Gehäuse (100) zusammenwirken, und
- wobei der Schieberkörper (201, 221, 231) Schlitze (206) aufweist, die auf gegenüberliegenden Seiten von diesem ausgebildet sind,
- wobei Wände des Führungshohlraums (101) Längsnuten (103a, 103b, 121a, 121b) aufweisen,
- wobei die flexiblen Arme des Halteclips in die Schlitze (206) des Schieberkörpers und in die Längsnuten des Führungshohlraums eingreifen, um das Führen des Schiebers in dem Gehäuse zu gewährleisten.

2. Scharnierelement nach Anspruch 1, wobei die Länge der Schlitze (206) größer als jene der Arme ist.

3. Scharnierelement nach einem der Ansprüche 1 bis 2, wobei die Haltemittel des Halteclips Sporne (207a, 207b) aufweisen, die auf den flexiblen Armen angeordnet sind und vorgesehen sind, um in Querausnehmungen (102a, 102b) einzurasten, die auf den Wänden des Führungshohlraums (101) gebildet sind.

4. Scharnierelement nach Anspruch 3, wobei die Sporne mit einem Verankerungswinkel versehen sind.

5. Scharnierelement nach einem der Ansprüche 3 oder 4, wobei die Sporne (207a, 207b) eine geneigte Fläche aufweisen und dazu bestimmt sind, als Endanschlag zu dienen, indem sie sich auf den Endabschnitten (206') der Schlitze (206) abstützen, wobei die geneigten Flächen ermöglichen, eine Längszugkraft zu nutzen, um die Sporne durch Kompression in ihren Quervertiefungen des Führungshohlraums (101) zu verriegeln.

6. Scharnierelement nach einem der Ansprüche 3 bis 5, wobei die Sporne (207a, 207b) dazu bestimmt sind, in die Endabschnitte (206') der Schlitze (206) einzugreifen, die mit einem Anschlussbogen ausgebildet sind, der dazu dient, eine Längszugkraft auf den Schieber in eine Druckeinwirkung der Sporne in Richtung der jeweiligen Quervertiefungen des Führungshohlraums (101) zu verwandeln.

7. Scharnierelement nach einem der Ansprüche 1 bis 6, wobei der Clip (207) ausgehend von einer Metallplatte mit geringer Dicke erhalten ist.

8. Scharnierelement nach einem der Ansprüche 1 bis 7, wobei der Clip eine im Wesentlichen U-förmige oder eine H-förmige, nicht symmetrische Form aufweist.

9. Scharnierelement nach einem der Ansprüche 1 bis 8, wobei das Gehäuse (100), das mit dem Führungshohlraum versehen ist, in Form eines Sockels ist und der Clip den Schieber in dem Sockel hält, um eine zusammengebaute Lieferung des Scharnierelements vor der Montage des Scharnierelements auf einem Träger zu ermöglichen.

10. Scharnierelement nach Anspruch 1, wobei der Schieber (2, 20) einen prismatischen Gehäusekörperabschnitt (2b, 20b) mit Außenflächen, die mit hoher Genauigkeit in dem Führungshohlraum (1a) gleiten können, und eine innere Aushöhlung (2b', 22a) aufweist, die das elastische Teil (3) aufnehmen kann, und wobei der Halteclip (6, 61, 600) in dem inneren Hohlraum (2b', 22a) über längliche Öffnungen (5, 51) eingefügt ist, die auf den gegenüberliegenden Seiten des prismatischen Körpers (2b, 20b) ausgebildet sind.

11. Scharnierelement nach Anspruch 10, **dadurch gekennzeichnet, dass** der Clip Arme mit einem Abschnitt (6a) aufweist, der von den länglichen Öffnungen (5, 51) ausgeht, wobei diese Letzteren von einer Länge sind, die ausreichend ist, um das Längsverschieben der ausgehenden Abschnitte (6a) auf dem gesamten elastischen Weg des Schiebers in der Aufnahme (1) zu ermöglichen.

12. Scharnierelement nach Anspruch 10, **dadurch gekennzeichnet, dass** der prismatische Gehäusekörperabschnitt (2b, 20b) eine Endöffnung am distalen Ende zum Längseinführen eines elastischen Teils in die innere Aushöhlung (2b') aufweist.

13. Scharnierelement nach Anspruch 12, **dadurch gekennzeichnet, dass** die Endöffnung Anschlagelemente (4, 23) für ein Ende des elastischen Teils (3) aufweist.

14. Scharnierelement nach Anspruch 10, **dadurch gekennzeichnet, dass** der prismatische Gehäusekörperabschnitt (2b, 20b) eine Längsöffnung (22) auf einer Seite zum seitlichen Einführen eines elastischen Teils in die innere Aushöhlung (22a) aufweist.

## Claims

1. Elastic hinge element for spectacle frame, comprising:
- a housing (100, 110, 120) comprising a guide cavity (101),
- a slide (200) comprising a body which is displaced in the guide cavity (101), and
- at least one elastic part (204, 237, 241, 242, 271) which cooperates with the housing (100) in order to produce an elastic reaction which opposes the extraction of the slide from the guide cavity (101),
the slide body (201, 221, 231) comprising an internal cavity which receives the elastic part,
and comprising a retaining clip (207) for locking a proximal end of the elastic part relative to the housing (100), the retaining clip comprising flexible arms which extend in a distal direction, i.e. towards the rear end of the hinge element, in the direction of the base of the guide cavity (101), and retaining means (207a, 207b) which cooperate with the housing (100), and
- the slide body (201, 221, 231) comprising slots (206) provided on the opposite sides of the latter,
- walls of the guide cavity (101) comprising longitudinal grooves (103a, 103b, 121a, 121b),
- the flexible arms of the retaining clip engaging in the slots (206) of the slide body and in the longitudinal grooves of the guide cavity, in order to ensure guidance of the slide in the housing.

2. Hinge element according to claim 1, in which the length of the slots (206) is greater than that of the arms.

3. Hinge element according to one of the claims 1 to 2, in which the retaining means of the retaining clip comprise lugs (207a, 207b) fitted on the flexible arms and provided in order to catch into the transverse recesses (102a, 102b) which are provided on the walls of the guide cavity (101).

4. Hinge element according to claim 3, in which the lugs are provided with an anchorage angle.

5. Hinge element according to one of the claims 3 or 4, in which the lugs (207a, 207b) have an inclined surface and are intended to serve as limit stop by being supported on the end portions (206') of the slots (206), the inclined surfaces making it possible to use a longitudinal traction force in order to lock the lugs by compression in their transverse hollows of the guide cavity (101).

6. Hinge element according to one of the claims 3 to 5, in which the lugs (207a, 207b) are intended to engage in the end portions (206') of the corresponding slots (206) with a connection elbow which serves to transform a longitudinal traction on the slide into the effect of pressing the lugs towards the respective transverse hollows of the guide cavity (101).

7. Hinge element according to one of the claims 1 to 6, in which the clip (207) is obtained from a metal plate of low thickness.

8. Hinge element according to one of the claims 1 to 7, in which the clip has essentially a U-shape or a non-symmetrical H-shape.

9. Hinge element according to one of the claims 1 to 8, in which the housing (100) provided with the guide cavity is in the form of a socket and the clip retains the slide in the socket in order to allow an assembled delivery of the hinge element before mounting of the hinge element on a support.

10. Hinge element according to claim 1, in which said slide (2, 20) has a prismatic box case portion (2b, 20b) having external surfaces which are able to slide with precision into said slide cavity (1a) and an internal recess (2b', 22a) which is able to house said elastic part (3), and in which the retaining clip (6, 51, 600) is inserted into said cavity (2b', 22a) through oblong openings (5, 51) provided on the opposite sides of the prismatic body (2b, 20b).

11. Hinge element according to claim 10, **characterised in that** said clip has arms with a portion protruding (6a) from said oblong openings (5, 51), the latter being of a sufficient length to make possible longitudinal sliding of said protruding portions (6a) over all the elastic path of the slide in the receiver (1).

12. Hinge element according to claim 10, **characterised in that** said prismatic box case portion (2b, 20b) has an end opening at the distal end for the longitudinal introduction of an elastic part into said internal recess (2b').

13. Hinge element according to claim 12, **characterised in that** said end opening has limit stop elements (4, 23) for one end of the elastic part (3).

14. Hinge element according to claim 10, **characterised in that** said prismatic box case portion (2b, 20b) has a longitudinal opening (22) on one side for the lateral introduction of an elastic part into said internal recess (22a).
